# NEUE EUROPÄISCHE PATENTSCHRIFT

(11) **EP 0 222 285 B2**
(45) Veröffentlichungstag und Bekanntmachung des Hinweises auf die Entscheidung über den Einspruch: **07.01.1998**
(45) Hinweis auf die Patenterteilung: 15.01.1992
(21) Anmeldenummer: 86115180.1
(22) Anmeldetag: 03.11.1986
(51) Int. Cl.: B21C 37/12, F16L 11/16

(54) **Verfahren und Vorrichtung zum Herstellen eines Wellrohres durch schraubenlinienförmiges Wickeln eines gewellten, dünnen Bandes vorzugsweise eines Stahlbandes**
Method and apparatus for making a corrugated tube by helically winding a thin corrugated strip, preferably a steel strip
Procédé et appareil de fabrication d'un tube ondulé par enroulement en hélice d'une bande mince ondulée, de préférence d'une bande en acier

(30) Priorität: 13.11.1985 DE 3540125
(43) Veröffentlichungstag der Anmeldung: 20.05.1987
(73) Patentinhaber: Fritz Hahn GmbH & Co. KG, D-54294 Trier (DE)
(72) Erfinder: Dittrich, Werner, D-5503 Konz (DE); Hahn, Horst, Dipl.-Ing., D-8000 München 19 (DE)
(74) Vertreter: Serwe, Karl-Heinz, Dipl.-Ing.

(56) Entgegenhaltungen:
- EP-A- 0 042 011
- EP-B- 48 306
- DE-A- 2 754 483
- FR-A- 1 245 233
- GB-A- 1 237 325
- GB-A- 1 564 933
- US-A- 1 796 015
- US-A- 3 435 852
- US-A- 3 566 643
- US-A- 3 604 464
- US-A- 3 650 015
- US-A- 3 753 367
- US-A- 3 858 421

## Beschreibung

Die Erfindung betrifft ein Verfahren und eine Vorrichtung zum Herstellen eines Wellrohres durch schraubenlinienförmiges Wickeln eines gewellten, dünnen Bandes, vorzugsweise eines Stahlbandes, bei dem mindestens eine Welle des zulaufenden Bandes in eine Welle des vorausgehend erzeugten Bandwickels eingelegt wird und bei dem mindestens eine Welle der ineinanderliegenden Wellen des Bandwickels durch Zusammenpressen im Querschnitt Omega-förmig verformt wird und der Wellenscheitel und die Wellenflanken jeweils flach aufeinandergepreßt werden, wobei die benachbarten Ränder der flachgedrückten Wellenflanken im Abstand zueinander stehen (siehe zum Beispiel GB-A-1564 933).

Derartige bekannte flexible Wellrohre werden vorwiegend bei Klima- und Lüftungseinrichtungen benutzt. Die Verbindung der einzelnen Bandwickel erfolgt bei diesen bekannten Rohren unterschiedlich, beispielsweise durch Flachdrücken, Bördeln, Falzen, stellenweises Niederdrücken o.dgl. mehr.

Sollen derartige Rohre beispielsweise zur Sanierung von Schornsteinen eingesetzt werden, so müssen diese Rohre korrosionsbeständig und gasdicht sein. Die Erfahrung hat nun gezeigt, daß die bisher bekannten Verbindungen der ineinandergelegten Wellen nicht gasdicht sind, insbesondere wenn als Ausgangsmaterial ein Stahlband bzw. Edelstahlband benutzt wird.

Die Aufgabe der Erfindung besteht daher darin, ein Verfahren der eingangs genannten Art vorzuschlagen, mit dem auf einfache und kostengünstige Weise gasdichte flexible Wellrohre hergestellt werden können.

Die Aufgabe wird dadurch gelöst, daß zunächst die flachzudrückende Welle des zulaufenden Bandes im Querschnitt etwa trogförmig mit flachem Wellenscheitel und leicht nach außen geneigten, annähernd geraden Wellenflanken vorverformt wird, daß anschließend die Wellenflanken der flachzudrückenden Welle derart mit dem Wellenscheitel zusammengepreßt werden, daß die flachgepreßte Welle mit Omega-förmigem Querschnitt etwa in der Mitte zwischen den Scheiteln der unverformten Wellen liegt, und daß schließlich die flachgepreßten Wellenflanken abwechselnd im Abstand punktförmig mit dem Wellenscheitel zusammengepreßt werden.

Vorzugsweise weisen die benachbarten Ränder der flachgepreßten Wellenflanken einen Abstand von etwa einem Sechstel des Wellenscheitels der flachgepreßten Welle auf.

Die flachgepreßten Wellenflanken werden jeweils in einem Abstand von ca. 1,5 bis 2 cm abwechselnd punktförmig mit dem Wellenscheitel zusammengepreßt. Vorzugsweise werden die flachgepreßten Wellenflanken ca. 0,2 mm tief punktförmig mit dem Wellenscheitel zusammengepreßt. Die flachgepreßten Wellenflanken werden vorteilhaft punktförmig mit einem Durchmesser von ca. 1,0 mm mit dem Wellenscheitel zusammengepreßt.

Vorzugsweise erfolgen die punktförmigen Zusammenpressungen der einen Wellenflanke jeweils in der Mitte des Abstandes zweier punktförmiger Zusammenpressungen der anderen flachgepreßten Wellenflanke.

Eine Vorrichtung ausschließlich zur Durchführung des Verfahrens besteht aus einer Wickeleinrichtung aus kreisförmig am Außenumfang des zu wickelndem Rohres angeordneten, frei drehbaren Stützrollen, aus zwei an der Einlaufstelle des Bandes in der Wickeleinrichtung angeordneten, an den beiden Breitseiten des Bandes angreifenden, die gegenseitige Verbindung der im Rohr benachbarten Bandwickel bewirkenden, antreibbaren Verbindungsrollen, aus zwei im Abstand vor dem Verbindungsrollenpaar angeordneten, ebenfalls an den Breitseiten des Bandes angreifenden Antriebsrollen, einer zwischen den Verbindungsrollen und den Antriebsrollen angeordneten Bandführung und einer zwischen Bandführung und Verbindungsrollen angeordneten Biegerolle. Erfindungsgemäß weisen die Antriebsrollen im Bereich der flachzudrückenden Welle ein komplementäres trogförmiges Profil auf und hat die eine Verbindungsrolle im Bereich der flachzudrückenden Welle eine im wesentlichen glatte Preßfläche zum Flachdrücken des Wellenscheitels und die andere Verbindungsrolle eine zugeordnete flache Preßfläche zum Flachpressen der Wellenflanken, in der jeweils nahe den seitlichen Rändern die Preßfläche überragende Druckstifte im Abstand und versetzt zueinander angeordnet sind.

Die seitlichen Randabschnitte sind vorteilhaft den mittleren Abschnitt der Preßfläche zum Flachpressen des Wellenscheitels bogenförmig überragend ausgebildet.

Vorteilhaft überragen die Druckstifte die Preßfläche um ca. 0,2 mm. Die Druckstifte weisen vorzugsweise kreisförmigen Querschnitt mit einem Durchmesser von ca. 1,0 mm auf. Der Abstand der Druckstifte in einer Reihe nahe dem seitlichen Rand der Preßfläche beträgt vorteilhaft ca. 3 bis 4 cm. Vorzugsweise ist die Druckfläche der Druckstifte gerade ausgebildet.

Vorzugsweise ist die Verbindungsrolle mit der die Druckstifte tragenden Preßfläche innerhalb des Bandwickels angeordnet.

Vorteilhaft hat die Verbindungsrolle mit der die Druckstifte tragenden Preßfläche einen wesentlichen kleineren Durchmesser als die andere, außerhalb des Bandwickels angeordnete, äußere Verbindungsrolle.

Vorteilhaft liegt die flachgepreßte Welle etwa in der Mitte zwischen den Scheiteln der unverformten Wellen.

Die Erfindung ist in den Zeichnungen beispielhaft dargestellt. Es zeigen:
- Fig. 1: eine Vorrichtung zum Herstellen eines Wellrohres durch schraubenlinienförmiges Wickeln eines gewellten, dünnen Bandes, in Vorderansicht,
- Fig. 2: einen Abschnitt des gewellten Bandes im Querschnitt,
- Fig. 3: einen Abschnitt des gewellten Bandes nach Durchlaufen der Einlaufrollen mit trogförmig verformter Welle im Querschnitt,
- Fig. 4: den Bandwickel nach Übereinanderlegen von zwei Lagen im Querschnitt,
- Fig. 5: einen Schnitt nach V-V der Fig. 1 durch die Verbindungsrollen,
- Fig. 6: eine teilweise Abwicklung der Preßfläche der einen Verbindungsrolle mit Druckstiften und
- Fig. 7: eine Verbindungsrolle mit Preßfläche im Schnitt durch einen Druckstift im Detail in vergrößerter Darstellung.

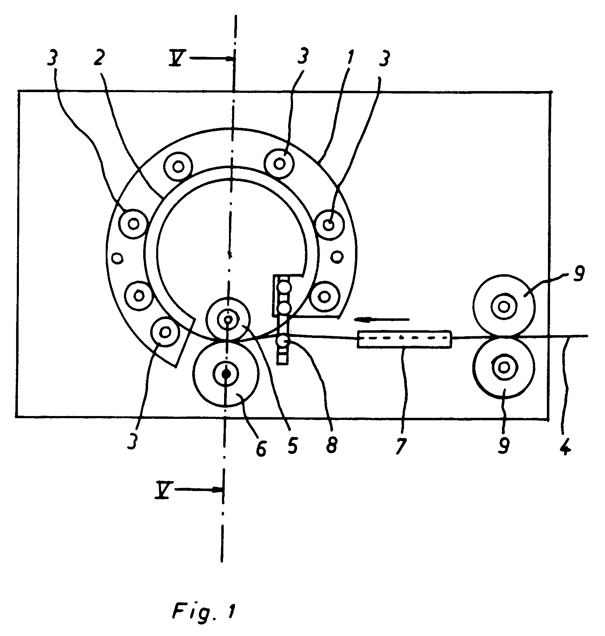

Nach Fig. 1 weist eine Vorrichtung zum Herstellen eines Wellrohres durch schraubenlinienförmiges Wickeln eines gewellten, dünnen Bandes eine Wickeleinrichtung (1) aus kreisförmig am Außenumfang eines zu wickelnden Rohres angeordneten, frei drehbaren Stützrollen (3) auf. An der Einlaufstelle des zu wickelnden Bandes (4) in die Wickeleinrichtung (1) sind eine innere Verbindungsrolle (5) und eine äußere Verbindungsrolle (6) angeordnet, die an den beiden Breitseiten des Bandes (4) angreifen und die die gegenseitige Verbindung der im Rohr (2) benachbarten Bandwickel bewirken.

Vor den Verbindungsrollen (5) und (6) ist zwischen einer Bandführung (7) eine Biegerolle (8) angeordnet. In Zulaufrichtung des Bandes (4) vor der Bandführung (7) ist weiterhin ein Paar Antriebsrollen (9) angeordnet, die gleichfalls an den Breitseiten des Bandes (4) angreifen.

Wie Fig. 2 zeigt, weist das von einer nicht dargestellten Vorratsspule zugeführte Band (4) vor Einlauf in die Antriebsrollen (9) ein gleichmäßiges rundes Wellenprofil auf. Die Antriebsrollen (9) weisen ein zueinander komplementäres trogförmigesn Profil auf, so daß eine Welle (10) des Bandes (4) im Querschnitt etwa trogförmig mit flachen Wellenscheitel und leicht nach außen geneigten, annähernd geraden Wellenflanken (15) vorverformt wird, wie dies in Fig. 3 dargestellt ist. In der Regel sind die Antriebsrollen (9) derart ausgebildet, daß nahe den Rändern des Bandes (4) jeweils eine Welle (10) trogförmig verformt wird.

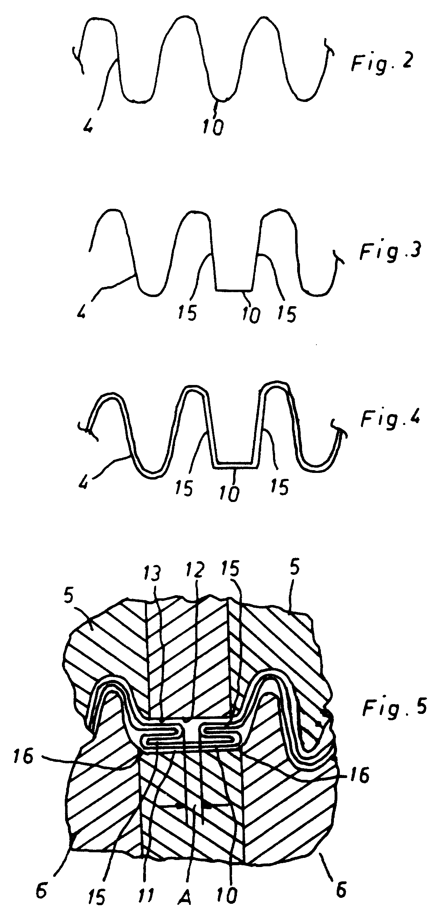

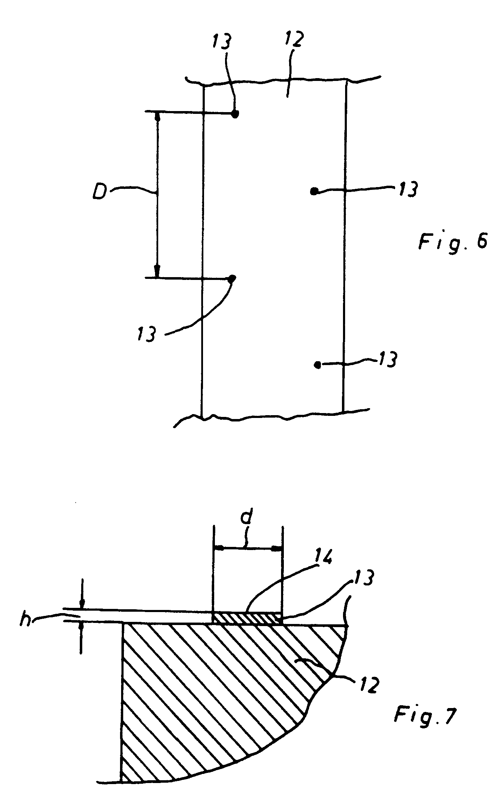

Wie die Fig. 1 zeigt, hat die innere, antreibbare Verbindungsrolle (5) wesentlich kleineren Durchmesser als die äußere, gleichfalls antreibbare Verbindungsrolle (6). Wie die Fig. 5 zeigt, hat die äußere Verbindungsrolle (6) eine im wesentlichen glatte Preßfläche (11), deren seitliche Randabschnitte (16) gegenüber dem mittleren ebenen Abschnitt leicht hochgewölbt ausgebildet sind. Die innere Verbindungsrolle (5) hat eine glatte Preßfläche (12). Die Preßfläche (12) trägt jeweils nahe den seitlichen Rändern im Abstand und versetzt zueinander angeordnete Druckstifte (13), wie dies die Abwicklung der Fig. 6 zeigt.

Der Abstand (D) der Druckstifte (13) in einer Reihe nahe dem seitlichen Rand der Preßfläche (12) beträgt ca. 3 bis 4 cm, wobei die Druckstifte (13) der anderen Reihe jeweils versetzt in der Mitte des Abstandes angeordnet sind, wie dies die Fig. 6 zeigt. Die Druckstifte (13) haben nach Fig. 7 eine gerade Druckfläche (14), überragen die Preßfläche (12) mit einer Höhe (h) von ca. 0,2 mm und haben einen Durchmesser (d) von ca. 1,0 mm.

Wie die Fig. 5 weiter zeigt, sind die Verbindungsrollen (5) und (6) beiderseits der Preßfläche (11) und (12) entsprechend der Wellung des Bandes profiliert. Die Preßfläche (11) und (12) liegen etwa in der Mitte zwischen den Scheiteln der Wellen des seitlichen Profils.

Zur Herstellung eines Rohres wird das zunächst gleichmäßig wellenförmige Band 4) mit einem Profil nach Fig. 2 den antreibbaren Antriebsrollen (9) zugeführt, in denen nahe den Bandrändern zwei Wellen (10) trogförmig vorverformt werden. Die beiden verformten Wellen (10) haben einen Querschnitt, wie er in Fig. 3 dargestellt ist.

Das vorverformte Band läuft dann durch die Bandführung (7) und über die Biegerolle (8) zwischen die Verbindungsrollen (5) und (6), wobei sich das Band (4) vor den Verbindungsrollen in die entsprechende vorverformte Welle (10) des vorausgehenden Bandwickels des Rohres (2) einlegt, wie dies in Fig. 4 dargestellt ist.

Die Verbindungsrollen (5) und (6) verformen nun, wie dies Fig. 5 zeigt, die ineinanderliegenden trogförmigen Wellen (10) Omega-förmig, indem sie die Wellenflanken (15) nach innen einknicken und flach auf den Wellenscheitel drücken. Die Druckstifte (13) der Preßfläche (12) rufen dabei kleine punktförmige, im Abstand und versetzt zueinander stehende Niederdrückungen in den beiden Wellenflanken hervor. Wie Fig. 5 weiter zeigt, beträgt der Abstand (A) der benachbarten Ränder der flachgepreßten Wellenflanken (15) etwa ein Sechstel der Breite des Wellenscheitels der flachgepreßten Welle (10).

Dadurch, daß die Ränder der flachgepreßten Wellenflanken (15) einen Abstand voneinander haben, können die Wellenflanken fest auf den Wellenscheitel aufgepreßt werden. Durch die Omega-förmige Ausbildung ergibt sich eine mehrfache Falzbildung, so daß das Rohr gasdicht ist. Die punktförmigen Niederdrückungen durch die Druckstifte (13) sichern diese Falzverbindung gegen Torsion.

Da die punktförmigen Niederdrückungen im Verhältnis zur Größe der zusammengepreßten Wellenflanken (15) nur sehr klein sind und in relativ großem Abstand zueinander stehen, ist verhindert, daß sich beim Einprägen der punktförmigen Niederdrückungen die Falzverbindung wieder öffnet und so das Rohr undicht wird.

## Patentansprüche

1. Verfahren zum Herstellen eines Wellrohres durch schraubenlinienförmiges Wickeln eines gewellten, dünnen Bandes (4), vorzugsweise eines Stahlbandes, bei dem mindestens eine Welle des zulaufenden Bandes (4) in eine Welle des vorausgehend erzeugten Bandwickels eingelegt wird und bei dem mindestens eine Welle der ineinanderliegenden Wellen des Bandwickels durch Zusammenpressen im Querschnitt Omega-förmig verformt wird und der Wellenscheitel und die Wellenflanken (15) jeweils flach aufeinandergepreßt werden, wobei die benachbarten Ränder der flachgedrückten Wellenflanken (15) im Abstand (A) zueinander stehen, dadurch gekennzeichnet, daß zunächst die flachzudrückende Welle (10) des zulaufenden Bandes (4) im Querschnitt etwa trogförmig mit flachem Wellenscheitel und leicht nach außen geneigten, annähernd geraden Wellenflanken (15) vorverformt wird, daß anschließend die Wellenflanken (15) der flachzudrückenden Welle derart mit dem Wellenscheitel zusammengepreßt werden, daß die flachgepreßte Welle mit Omega-förmigem Querschnitt etwa in der Mitte zwischen den Scheiteln der unverformten Wellen liegt, und daß schließlich die flachgepreßten Wellenflanken abwechselnd im Abstand punktförmig mit dem Wellenscheitel zusammengepreßt werden.

2. Verfahren nach Anspruch 1, dadurch gekennzeichnet, daß die benachbarten Ränder der flachgepreßten Wellenflanken (15) einen Abstand (A) von etwa einem Sechstel der Breite des Wellenscheitels der flachgepreßten Welle (10) aufweisen.

3. Verfahren nach Anspruch 1 oder 2, dadurch gekennzeichnet, daß die flachgepreßten Wellenflanken (15) jeweils in einem Abstand von ca. 1,5 bis 2 cm abwechselnd punktförmig mit dem Wellenscheitel zusammengepreßt werden.

4. Verfahren nach einem der Ansprüche 1 bis 3, dadurch gekennzeichnet, daß die flachgepreßten Wellenflanken (15) ca. 0,2 mm tief punktförmig mit einem Durchmesser von ca. 1,0 mm mit dem Wellenscheitel zusammengepreßt werden.

5. Verfahren nach einem der Ansprüche 1 bis 4, dadurch gekennzeichnet, daß die punktförmigen Zusammenpressungen der einen Wellenflanke (15) jeweils in der Mitte des Abstandes (D) zweier punktförmiger Zusammenpressungen der anderen flachgepreßten Wellenflanke erfolgen.

6. Vorrichtung ausschließlich zur Durchführung des Verfahrens nach einem der Ansprüche 1 bis 5, bestehend aus einer Wickeleinrichtung (1) aus kreisförmig am Außenumfang des zu wickelnden Rohres angeordneten, frei drehbaren Stützrollen (3) aus zwei an der Einlaufstelle des Bandes (4) in die Wickeleinrichtung (1) angeordneten, an den beiden Breitseiten des Bandes (4) angreifenden, die gegenseitige Verbindung der im Rohr (2) benachbarten Bandwickel bewirkenden, antreibbaren Verbindungsrollen (5, 6), aus zwei im Abstand vor dem Verbindungsrollenpaar angeordneten, ebenfalls an den Breitseiten des Bandes (4) angreifenden Antriebsrollen (9), einer zwischen den Verbindungsrollen (5, 6) und den Antriebsrollen (9) angeordneten Bandführung (7) und einer zwischen Bandführung (7) und Verbindungsrollen (5, 6), angeordneten Biegerolle (8), dadurch gekennzeichnet, daß die Antriebsrollen (9) im Bereich der flachzudrückenden Welle (10) des Bandes (4) ein komplementäres trogförmiges Profil aufweisen und daß die eine Verbindungsrolle (6) im Bereich der flachzudrückenden Welle eine im wesentlichen glatte Preßfläche (11) zum Flachdrücken des Wellenscheitels und die andere Verbindungsrolle (5) eine zugeordnete flache Preßfläche (12) zum Flachpressen der Wellenflanken (15) hat, in der jeweils nahe den seitlichen Rändern die Preßfläche überragende Druckstifte (13) im Abstand und versetzt zueinander angeordnet sind.

7. Vorrichtung nach Anspruch 6, dadurch gekennzeichnet, daß die seitlichen Randabschnitte (16) den mittleren Abschnitt der Preßfläche (11) zum Flachpressen des Wellenscheitels bogenförmig überragend ausgebildet sind.

8. Vorrichtung nach Anspruch 6 oder 7, dadurch gekennzeichnet, daß die Druckstifte (13) die Preßfläche (12) um ca. 0,2 mm überragen, daß die Druckstifte (13) kreisförmigen Querschnitt mit einem Durchmesser (d) von ca. 1,0 mm aufweisen und daß der Abstand (D) der Druckstifte (13) in einer Reihe nahe dem seitlichen Rand der Preßfläche (12) ca. 3 bis 4 cm beträgt.

9. Vorrichtung nach einem der Ansprüche 6 bis 8, dadurch gekennzeichnet, daß die Druckfläche (14) der Druckstifte (13) gerade ausgebildet ist.

## Claims

1. Method of manufacturing a corrugated pipe by winding in helical lines a corrugated thin band (4), preferably a steel band, with at least one wave of the delivered band (4) being placed in a wave of the preceding band winding, and with at least one wave of the interlaid waves of the band winding being cross-sectionally Omega-shaped by way of compression, and whereby the wave crown and the wave flanks (15) are each pressed flat on top of one another, and the adjacent edges of the flattened wave flanks (15) stand at a gap (A) to one another, **characterised in that** initially the wave (10), which is to be flattened, of the delivered band (4) is pre-shaped to be cross-sectionally approximately trough-shaped with a flat wave crown and slightly outwardly inclined, virtually straight wave flanks (15), that the wave flanks (15) of the wave which is to be flattened are subsequently pressed together with the wave crown in such a manner that the flattened wave of Omega-shaped cross-section lies approximately in the middle between the crowns of the not shaped waves, and that the flattened wave flanks are finally alternately spot-compressed with the wave crown.

2. Method according to Claim 1, **characterised in that** the adjacent edges of the flattened wave flanks (15) have a gap (A) of approximately one sixth of the breadth of the wave crown of the flattened wave (10).

3. Method according to Claim 1 or 2, **characterised in that** the flattened wave flanks (15) are alternately spot-compressed with the wave crown at a respective gap between approximately 1.5 and 2 cm.

4. Method according to one of Claims 1 to 3, **characterised in that** the flattened wave flanks (15) are compressed in the shape of spots with the wave crown approximately 0.2mm deep with a diameter of approximately 1.0mm.

5. Method according to one of Claims 1 to 4, **characterised in that** the spot-compressions of the one wave flank (15) are each carried out in the middle of the distance (D) of spot-compressions of the other flattened wave flank.

6. Apparatus for exclusively carrying out the method according to one of Claims 1 to 5, comprising a winding device (1), consisting of freely rotatable support rollers (3), which are arranged circularly on the outer periphery of the pipe to be wound, two driven connecting rollers (5, 6), which are arranged at the place of entry of the band (4) into the winding device (1), engage the two broad sides of the band (4) and effect a connection between adjacent band windings in the pipe (2), two drive rollers (9) which are arranged at a distance in front of the connecting roller pair and also engage the broad sides of the band (4), a band guide (7), which is arranged between the connecting rollers (5, 6) and the drive rollers (9), and a bending roller (8), which is arranged between band guide (7) and connecting rollers (6), **characterised in that** the drive rollers (9) have a complementary trough-like profile in the area of the wave (10), which has to be flattened, of band (4), and that the one connecting roller (6) has a substantially plane pressure surface (11) in the area of the wave, which has to be flattened, for the purpose of flattening the wave crown, and that the other connecting roller (5) has an associated flat pressure surface (12) for flattening the wave flanks (15), with pressure pins (13), which each extend beyond the pressure surface in the vicinity of the lateral edges, arranged at a distance and offset relative to each other.

7. Apparatus according to Claim 6, **characterised in that** the lateral edge sections (16) are arranged to arc-like extend beyond the middle section of the pressure surface (11) for flattening the wave crown.

8. Apparatus according to Claim 6 or 7, **characterised in that** pressure pins (13) extend beyond the pressure surface (12) by approximately 0.2mm, that the pressure pins (13) are of circular cross-section with a diameter (d) of approximately 1.0mm, and that the distance (D) of the pressure pins (13) in a row near the lateral edge of the pressure surface (123) is between approximately 3 and 4 mm.

9. Apparatus according to one of Claims 6 to 8, **characterised in that** the pressure surface (14) of the pressure pins (13) is arranged to be straight.

## Revendications

1. Procédé pour la fabrication d'un tube ondulé par enroulement en hélice d'une bande mince (4) ondulée, de préférence un feuillard d'acier, au cours duquel au moins une onde du feuillard amené (4) s'engage dans une onde de la spire de feuillard fabriquée précédemment et au cours duquel au moins l'une des ondes engagées les unes dans les autres de la spire de feuillard est déformée par pressage pour présenter une section en forme d'Oméga, et le sommet de l'onde et les flancs de celle-ci (15) étant pressés respectivement les uns sur les autres, tandis que les bords avoisinants des flancs (15) aplatis par compression sont placés à une certaine distance (A) l'un de l'autre, caractérisé par le fait que tout d'abord l'onde à aplatir (10) du feuillard amené (4), est prédéformée pour présenter une section en forme de cuvette à sommet d'onde aplatie et des flancs (15) sensiblement droits, légèrement inclinés vers l'extérieur, par le fait qu'ensuite les flancs (15) de l'onde à aplatir sont pressés en même temps que le sommet de l'onde de telle sorte que l'onde aplatie à section en forme d'Oméga se situe sensiblement au centre entre les sommets des ondes non-déformées et qu'enfin les flancs aplatis sont pressés en même temps que le sommet de l'onde par points placés à des distances alternées.

2. Procédé selon la revendication 1, caractérisé par le fait que les bords voisins des flancs (15) aplatis par pression présentent une distance (A) égale à sensiblement 1/6 de la largeur du sommet de l'onde aplatie (10).

3. Procédé selon l'une des revendications 1 ou 2, caractérisé par le fait que les flancs (15) de l'onde aplatie sent pressés en même temps que le sommet de l'onde par points distants entre eux alternativement d'environ 1,5 à 2 cm.

4. Procédé selon l'une quelconque des revendications 1 à 3, caractérisé par le fait que les flancs aplatis (15) de l'onde aplatie sont pressés en même temps que le sommet de l'onde sur une profondeur d'environ 0,2 mm par points d'un diamètre d'environ 1,0 mm.

5. Procédé selon l'une quelconque des revendications 1 à 4, caractérisé par le fait que les pressages par points de l'un des flancs (15) s'effectuent respectivement au centre de la distance (D) entre deux points de pressage de l'autre flanc aplati de l'onde.

6. Dispositif spécialement destiné à la mise en oeuvre du procédé selon l'une quelconque des revendications 1 à 5, constitué d'un dispositif d'enroulement (1), de galets de renfort (3) tournant librement, disposés circonférentiellement sur le pourtour extérieur du tube à enrouler, de deux galets de liaison (5, 6) pouvant être entraînés, suscitant la liaison réciproque des spires de feuillard voisines à l'intérieur du tube (2), s'attaquant aux deux longueurs du feuillard (4) et disposés au point d'introduction du feuillard (4) dans le dispositif d'enroulement (1), de deux galets d'entraînement (9) situé à une certaine distance avant la paire de galets de liaison et venant en prise également avec les longueurs du feuillard (4), d'un guidage (7) du feuillard disposé entre les galets de liaison (5, 6) et les galets d'entraînement (9), et d'un galet de pliage (8) situé entre le guidage (7) et les galets de liaison (5, 6) caractérisé en ce que les galets d'entraînement (9) présentent au voisinage de l'onde (10) à aplatir du feuillard (4), un profil complémentaire en forme de cuvette, en ce que l'un des galets de liaison (6) a une face de compression (11) sensiblement lisse pour aplatir le sommet de l'onde et en ce que l'autre galet de liaison (5) a une face de compression (12) plane correspondante pour aplatir les flancs (15) de l'onde, tandis que sur ladite face (12) et à proximité des bords latéraux, des tiges de pression (13) faisant saillie par rapport à ladite face de compression sont disposées à une certaine distance l'une de l'autre et décalées l'une par rapport à l'autre.

7. Dispositif selon la revendication 6, caractérisé par le fait que les sections des bords latéraux (16) sont réalisées de manière à se projeter en forme d'arc sur la section centrale de la face de compression (11) afin d'aplatir le sommet de l'onde.

8. Dispositif selon les revendications 6 ou 7, caractérisé par le fait que les tiges de pression (13) font saillie hors de la face (12) d'environ 0,2 mm, que les tiges de pression (13) présentent une section circulaire d'un diamètre (d) d'environ 1,0 mm, et que la distance (D) des tiges (13) dans une rangée à proximité du bord latéral de la face (12) est égale à environ 3 à 4 cm.

9. Dispositif selon l'une quelconque des revendications 6 à 8, caractérisé par le fait que la face de compression (14) des tiges de compression (13) est droite.
